# EUROPÄISCHE PATENTSCHRIFT

(11) **EP 1 690 482 B1**
(45) Veröffentlichungstag und Bekanntmachung des Hinweises auf die Patenterteilung: **05.11.2008**
(21) Anmeldenummer: 05026894.5
(22) Anmeldetag: 08.12.2005
(51) Int. Cl.: A47J 31/46

(54) **Brühvorrichtung mit Überdruckventil**
Brewing device overpressure relief valve
Dispositif d'infusion avec soupape de surpression

(30) Priorität: 11.02.2005 DE 202005002228 U
(43) Veröffentlichungstag der Anmeldung: 16.08.2006
(73) Patentinhaber: PAV PATENTVERWERTUNG KG, 83395 Freilassing (DE)
(72) Erfinder:
(74) Vertreter: Grünecker, Kinkeldey, Stockmair & Schwanhäusser Anwaltssozietät

(56) Entgegenhaltungen:
- EP-A- 1 502 531
- US-A1- 2004 188 459

## Beschreibung

Die vorliegende Erfindung betrifft eine Brühvorrichtung zur Zubereitung von Kaffee, insbesondere für eine Niederdruckkaffeemaschine, mit einer Brühkammer und einer Überlaufeinheit, die einen selbsttätig schaltenden, druckgesteuerten Ventilmechanismus aufweist, mit einer in einem ersten Druckbereich offenen Überlaufschaltstellung und einer in einem zweiten, höheren Druckbereich geschlossenen Brühschaltstellung, wobei der Ventilmechanismus zusätzlich eine offene Überdruckschaltstellung in einem dritten, oberhalb des zweiten liegenden Druckbereichs aufweist.

Eine, bereits im Verkauf befindliche Brühvorrichtung zeigt die DE 103 34 544. Diese für eine Niederdruckkaffeemaschine eingesetzte Brühvorrichtung weist eine Brühkammer auf, in der in einer Vertiefung des unteren Brühkammerteils eine mit gemahlenen Kaffee gefülltes Filterkissen angeordnet ist. Im oberen Brühkammerteil ist eine Ventileinheit für Brühwasser mit einem Zulauf für das Brühwasser, einem Auslass in die Brühkammer und einem Überlauf ausgebildet. Im Betrieb wird beim Erwärmen und Nachheizen des Brühwassers in einer Boilervorrichtung ein geringer Volumenstrom des sich ausdehnenden Wassers bei geringem Druck in die Ventileinheit gefördert und strömt über den Überlauf aus dieser wieder hinaus. Nach dem Auslösen des Brühvorgangs wird von einer Pumpe heißes Brühwasser bei Betriebsdruck über die Ventileinheit und den Auslass in die Brühkammer gefördert. Dabei kann es in der Ventileinheit und den zugehörigen Zuführleitungen bei Start der Pumpe zu einem Druckanstieg auf den maximalen Arbeitsdruck der Pumpe kommen, wenn der Auslass in die Brühkammer durch ein Auslassventil versehentlich verschlossen ist, bzw. der Auslass selbst verstopft ist. Weiter kann es auch durch hochgefüllte Filterkissen und den damit verbundenen erhöhten Widerstand in der Brühkammer zu einem ungewünschten Druckanstieg oberhalb des Betriebsdrucks führen. Ein solcher ungewollter Druckanstieg oberhalb des Betriebsdrucks kann sowohl zu Schäden in der Ventileinheit und den Zuführleitungen als auch zu einem schlechten Brühergebnis führen.

Weitere Kaffeemaschinen sind aus der US 2004 188 459 A1 und der EP 1 502 531 A bekannt.

Der vorliegenden Erfindung liegt daher die Aufgabe zugrunde, eine Brühvorrichtung zur Zubereitung von Kaffee der eingangs genannten Art mit einer sicheren Funktion des selbsttätig schaltenden, druckgesteuerten Ventilmechanismus bereitzustellen.

Diese Aufgabe wird erfindungsgemäß dadurch gelöst, dass die Ventileinheit mindestens eine Membran und eine Kanalplatte umfasst, wobei die Kanalplatte mindestens eine Ventilöffnung an der der Membran zugewandten Seite der Kanalplatte, mindestens einen mit der mindestens einen Ventilöffnung in Verbindung stehenden Kanalabschnitt zum radialen Führen des Brühwassers in der Kanalplatte und mindestens eine mit dem mindestens einen Kanalabschnitt in Verbindung stehenden Durchgangsbohrung, die an der gegenüberliegenden Seite der Kanalplatte mündet, aufweist.

In den bisherigen, insbesondere für Niederdruckkaffeemaschinen eingesetzten Brühvorrichtungen wird den unterschiedlichen Schaltstellungen bzw. Betriebszuständen des Ventilmechanismus nur eine geringe Beachtung geschenkt. Dabei erfordern sowohl die Anforderung eines guten Brühergebnisses als auch die Sicherheitsaspekte für den Betrieb der Brühvorrichtung und den Schutz des Nutzers ein möglichst genaues Ansprechverhalten des Ventilmechanismus, entsprechend der erfindungsgemäßen Ausgestaltung der Brühvorrichtung. Die vorliegende Überlaufeinheit ermöglicht in der offenen Überlaufschaltstellung im ersten Druckbereich einen drucklosen oder mit einem geringen Druck beaufschlagten Ablauf von Wasser, während die Überlaufeinheit im Brühzustand geschlossen ist, wodurch das gesamte Brühwasser in diesem zweiten, höheren Druckbereich für die Zubereitung von Kaffee in der Brühkammer genutzt werden kann. Oberhalb des zweiten Druckbereichs weist der vorliegende Ventilmechanismus wieder eine offene Schaltstellung auf, um den Aufbau eines Überdrucks in der Brühvorrichtung zu verhindern. Der geschlossene Zustand der Überlaufeinheit in einem begrenzten Druckbereich ermöglicht neben dem Auslass des Brühwassers in die Brühkammer auch eine geregelte zusätzliche Nutzung des Brühwassers für andere Zwecke.

Die Ventileinheit umfasst mindestens eine Membran und eine Kanalplatte, wobei die Kanalplatte mindestens eine Ventilöffnung an der der Membran zugewandten Seite der Kanalplatte, mindestens einen mit der mindestens einen Ventilöffnung in Verbindung stehenden Kanalabschnitt zum radialen Führen des Brühwassers in der Kanalplatte und mindestens eine mit dem mindestens einen Kanalabschnitt in Verbindung stehenden Durchgangsbohrung, die an der gegenüberliegenden Seite der Kanalplatte mündet, aufweist. Die Kanalplatte ermöglicht durch die Kanalabschnitte und die Durchgangsbohrungen eine einfache und effektive Verteilung des Brühwassers zu den Funktionselementen, d.h. den Ventilen und Wasserführungseinrichtungen des oberen Brühkammerteils. Dadurch kann das Brühwasser frei von konstruktiven Einschränkungen zu jeder Position in der Kanalplatte, bzw. in dem oberen Brühkammerteil, geführt werden. Durch diese Ausführung der Kanalplatte können in Zusammenwirkung mit der Membran unterschiedlichste Ventilfunktionen verwirklicht werden, die durch die Ausgestaltung der Membran als Funktionsteil der Ventileinheit eine sichere Ventilfunktion ermöglichen.

Um die verschiedenen Zustände in den unterschiedlichen Druckbereichen zu ermöglichen, kann der Ventilmechanismus ein Überlaufventil und ein Überdruckventil aufweisen, wobei das Überlaufventil im ersten Druckbereich offen ist und das Überdruckventil nur im dritten Druckbereich offen ist. Dabei können bevorzugt das Überlaufventil und das Überdruckventil dauerhaft parallel geschaltet sein. Insbesondere in der parallelen Anordnung ermöglichen das Überlaufventil und das Überdruckventil in sicherer Weise die notwendigen unterschiedlichen Schaltstellungen des selbsttätig schaltenden, druckgesteuerten Ventilmechanismus bereitzustellen. Dabei kann das Überdruckventil in einer einfachen Ausführungsform eine Ventilkugel und eine Druckfeder aufweisen, wobei die Ventilkugel mit einem entsprechenden Ventilsitz zusammenwirken kann, um das Überdruckventil sicher abzudichten. Das Zusammenwirken einer Ventilkugel mit einer Druckfeder und einem Ventilsitz ermöglicht eine relativ genaue Einstellung eines erforderlichen Öffnungsdrucks.

Eine weitere Ausbildung sieht vor, dass die Überlaufeinheit einen Überlauf aufweist und das Überdruckventil und das Überlaufventil in den Überlauf münden. Der Überlauf ermöglicht einen Ablauf von Luft, Kondensat und abgekühlten Brühwasser, sowie einen Erwärmungsüberlauf, d.h. den bei der Erwärmung von Wasser aus einer Boilervorrichtung durch die Volumenzunahme herausgedrückten Wasseranteil aus der Überlaufeinheit über das Überlaufventil abzuführen, aber auch den Ablauf, bzw. Druckabbau von Brühwasser im dritten, oberhalb des Betriebsdruckbereichs liegenden Überdruckbereichs. Dabei sind das Überdruckventil und das Überlaufventil bevorzugt in einem geringen Abstand zueinander angeordnet, um die Zuführung zu einem gemeinsamen Überlauf zu erleichtern. Der Überlauf kann weiter mit einem Vorratsbehälter verbunden sein, um das ablaufende Wasser aufzufangen.

Eine zweckmäßige Ausführungsform sieht vor, dass der erste Druckbereich in einem Bereich bis 1,5 bar, der zweite Druckbereich in einem Bereich zwischen 1,2 und 2,5 bar und der dritte Druckbereich in einem Bereich oberhalb von 1,8 bar festgelegt sind, wobei die tatsächlich festgelegten Druckbereiche im Wesentlichen überschneidungsfrei sind. Die angegebenen Druckbereiche ermöglichen eine auf die Anwendung der Brühvorrichtung abgestimmte Auswahl der Druckbereiche. Dabei liegt der erste Druckbereich bevorzugt in einem Bereich bis 1,0 bar, üblicherweise nahezu drucklos, bzw. bis zu 0,5 bar, der zweite Druckbereich zum Brühen oder Heißwasserauslauf bevorzugt in einem Bereich zwischen 1,5 und 1,8 bar und der dritte Druckbereich, indem das Druckventil anspricht, bevorzugt in einem Bereich oberhalb von ca. 2,0 bar festgelegt sind. Dabei sind diese bevorzugten Druckbereiche insbesondere für eine Niederdruckkaffeemaschine geeignet. Die Abstimmung der Druckbereiche zueinander ermöglicht, dass die Druckführung des in die Überlaufeinheit geförderten Brühwassers nur dann erfolgt, wenn das Brühwasser weder durch den Auslass in die Brühkammer noch in einen anderen Auslauf in dem zweiten festgelegten Druckbereich abfließen kann.

Vorteilhafterweise kann die Brühkammer einen oberen Brühkammerteil und einen unteren Brühkammerteil aufweisen, wobei der obere Brühkammerteil die Überlaufeinheit umfasst. Hierdurch wird eine einfache Konstruktion der gesamten Brühvorrichtung mit einer einfachen und sicheren Ausgestaltung der Brühkammer ermöglicht, die eine hohe Betriebssicherheit aufweist. Dabei wird durch die Einbindung der Überlaufeinheit in den oberen Brühkammerteil dieser Teil der Brühkammer durch den Erwärmungsüberlauf über das Überlaufventil vorgewärmt. Durch diesen integrierten Vorwärmkreislauf wird eine Abkühlung des beim Brühvorgang in die Brühkammer einströmenden Brühwassers an kalten Umgebungsflächen verhindert. Auch ermöglicht die Einbindung der Überlaufeinheit mit dem Überdruckventil in den oberen Brühkammerteil den bei der Verwendung von hoch gefüllten Kaffeepads oder einer verstopften Auslassdüse aus der Brühkammer ansteigenden Arbeitsdruck in der Brühkammer ohne weitere Verbindungsleitungen direkt im oberen Brühkammerteil zu begrenzen.

Eine günstige Ausgestaltung sieht vor, dass der obere Brühkammerteil weiter einen Zulauf für Brühwasser, eine Ventileinheit, einen Auslass für Brühwasser in die Brühkammer und einen Heißwasserauslauf aufweist. Die Einbindung aller notwendigen Wasserführungseinrichtungen in den oberen Brühkammerteil vereinfacht die Konstruktion der Brühvorrichtung und reduziert insbesondere die Anzahl der Verbindungsleitungen zwischen den sonst notwendigen Bauelementen. Weiterhin erweitert die Einbindung eines Heißwasserauslaufs das Funktionsspektrum der Brühvorrichtung. Auf eine sonst notwendige eigenständige Vorrichtung mit möglicherweise einer eigenständigen Ventileinheit, einer zweiten Pumpe und/oder einer weiteren Heizeinrichtung kann verzichtet werden. Zusätzlich wird durch die Führung des Heißwassers über den oberen Brühkammerteil der obere Brühkammerteil erwärmt und so die Abkühlung des in die Brühkammer eintretenden Brühwassers weiter verringert.

Für einen einfachen Anschluss, insbesondere flexibler Leitungen, an den oberen Brühkammerteil, kann der Zulauf, der Überlauf und/oder der Heißwasserauslauf Steckanschlüsse aufweisen, die bevorzugt zum Anschließen flexibler Leitungen ausgebildet sind.

Eine bevorzugte Ausführungsform sieht vor, dass die Ventileinheit ein Auslassventil, ein Heißwasser-Auslaufventil und das Überlaufventil umfasst. Das Überlaufventil ermöglicht ein gezieltes Absperren des Überlaufs im Brühzustand, während das Auslassventil und das Heißwasser-Auslaufventil die Abgabe des Brühwassers im Brühzustand an den Auslass in die Brühkammer oder den Heißwasserauslauf steuern. Dabei ist das Überlaufventil dem Auslassventil und Heißwasser-Auslaufventil vorgeschaltet, so dass nur beim Erreichen des Betriebsdruckbereichs die Stellung des Auslassventils oder Heißwasser-Auslaufventils ihre Wirkung entfaltet.

Dabei kann die mindestens eine Membran als einteilige, flexible Platte, bevorzugt aus einem gummielastischem Material, ausgebildet sein, die sich im Wesentlichen über eine Stirnfläche der Kanalplatte erstreckt und mindestens ein Loch aufweist, das einen Übertritt des Brühwassers von der einen Membranseite auf die andere Membranseite ermöglicht. Eine einteilige, flexible Membranplatte ist, insbesondere wenn sie aus einem gummielastischem Material hergestellt ist, eine sehr einfache Lösung für eine geeignete Membran, die trotzdem die Vorteile einer hohen Funktionssicherheit sowie einer einfachen Herstellung aufweist. Die Anordnung der Membranplatte auf der Stirnfläche der Kanalplatte ermöglicht eine freie Positionierung von Ventilen. Neben Gummiwerkstoffen sind auch silikonbasierte Materialien und TPE-Werkstoffe für die Herstellung einer derartigen Membran geeignet. Dabei ermöglicht das Loch in der Membran den direkten Einsatz der Kanalplatte im oberen Brühkammerteil ohne einen seitlichen Zufluss zur Kanalplatte zu erfordern. So wird eine möglichst kurze und direkte Verbindung des Zulaufs für Brühwasser mit dem Auslass für Brühwasser in die Brühkammer und/oder dem Heißwasserauslauf ermöglicht.

Für eine einfache und funktionssichere Ausbildung der notwendigen Ventile können das Überlaufventil, das Auslassventil und/oder das Heißwasser-Auslaufventil von der Kanalplatte und der mindestens einen Membran ausgebildet sein. Bevorzugt können eine Auslaufbohrung und eine Auslassbohrung in der Kanalplatte durch die Membran verschließbar ausgestaltet sein. Auf diese Weise kann ein Heißwasser-Auslaufventil und ein Auslassventil für Brühwasser in die Brühkammer ohne die Verwendung zusätzlicher Ventilbauteile realisiert werden.

Um eine direkte Anbindung des Zulaufs für das Brühwasser an die Brühkammer zu ermöglichen kann der obere Brühkammerteil eine Überdruckventilplatte, eine Deckplatte und eine Druckplatte aufweisen, wobei die Ventileinheit zwischen der Druckplatte und der Deckplatte angeordnet ist und das Überdruckventil zwischen der Überdruckventilplatte und der Deckplatte ausgebildet ist. Die Anordnung der Ventileinheit im oberen Brühkammerteil reduziert die Wärmeverluste und ermöglicht die Aufheizung aller Bauelemente des oberen Brühkammerteils.

Günstigerweise kann der untere Brühkammerteil eine Vertiefung zur Aufnahme von mindestens einem mit gemahlenen Kaffee gefüllten Filterkissen (Kaffeepad) aufweisen, und der obere Brühkammerteil relativ zum unteren Brühkammerteil bewegbar ausgeführt und von einer Öffnungsstellung, in der das Kaffeepad einsetz- oder entnehmbar ist, in eine Brühstellung überführbar sein. Diese Konstruktion ermöglicht eine sichere Aufnahme des Kaffeepads in der Brühkammer sowie unterschiedliche, konstruktiv einfache Lösungen zum Schließen der Brühkammer.

Eine vorteilhafte Ausbildung sieht vor, dass ein Stellmechanismus vorgesehen ist, wobei der Stellmechanismus ausgebildet ist die Ventileinheit zwischen dem Auslass für Brühwasser und dem Heißwasserauslauf umzuschalten. Ein solcher Stellmechanismus ermöglicht die sichere Funktion der Ventileinheit und der Zuführung des Brühwassers zu einem Auslass in die Brühkammer und einem Heißwasserauslauf zu weiteren Funktionseinheiten. Dabei werden in der Ventileinheit zwei Brühfunktionen vereinigt, der Zulauf von Brühwasser in die Brühkammer und der Zulauf von Brühwasser in einen separaten Auslauf für Brühwasser, beispielsweise zum Aufbrühen von Tee oder Instantgetränken.

Des Weiteren bezieht sich die hier vorliegende Erfindung auf eine Ausführungsform der Brühvorrichtung zur Zubereitung von Kaffee gemäß dem abhängigen Anspruch 16. Die unterschiedlichen Druckbereiche des Ventilmechanismus ermöglichen ein genaues Ansprechverhalten des druck- und/oder strömungsgesteuerten Ventilmechanismus für einen optimal und sicheren Betrieb der Brühvorrichtung. Zusätzlich ergeben sich durch die verschiedenen definierten Schaltstellungen weitere Möglichkeiten die Funktion der Brühvorrichtung zu ergänzen.

Im Folgenden wird anhand von Zeichnungen eine Ausführungsform der erfindungsgemäßen Brühvorrichtung näher erläutert. Es zeigen:
- Fig. 1: eine seitliche Schnittansicht der Brühvorrichtung in einer Brühstellung,
- Fig. 2: eine vergrößerte Schnittansicht des oberen Brühkammerteils aus Fig. 1,
- Fig. 3: eine perspektivische Ansicht der Unterseite der Kanalplatte aus Fig. 1 und 2,
- Fig. 4: eine vergrößerte Schnittansicht des oberen Brühkammerteils in einer anderen Schnittebene,
- Fig. 5: eine vergrößerte Schnittansicht des oberen Brühkammerteils in einer weiteren Schnittebene, und
- Fig. 6: eine vergrößerte Schnittansicht des oberen Brühkammerteils in noch einer anderen Schnittebene.

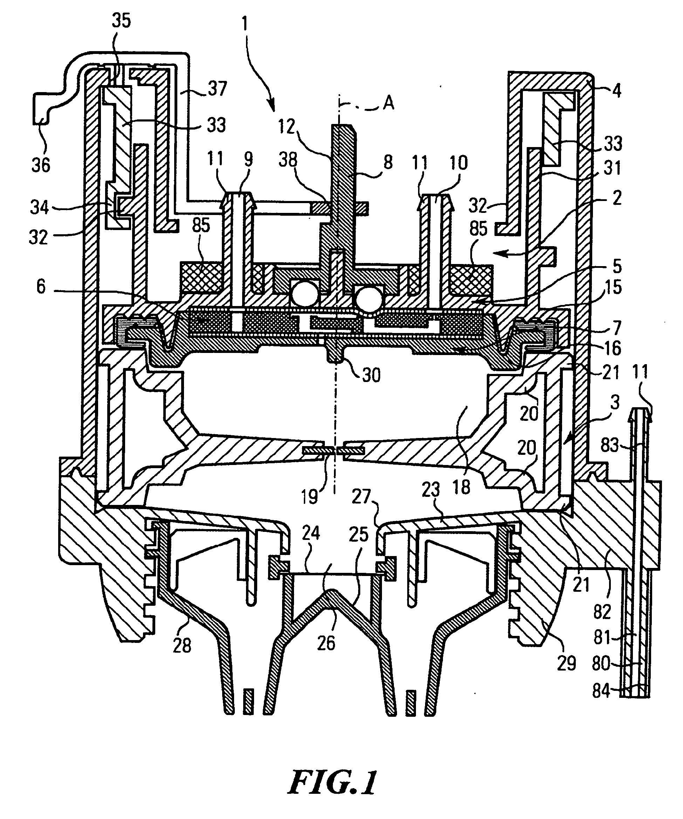

Die in Fig. 1 dargestellte Brühvorrichtung ist Bestandteil einer Niederdruckkaffeemaschine, die in hier nicht beschriebener Weise bekannte Baueinheiten, wie Wasservorratsbehälter, Boilervorrichtung, Wasserpumpe und die für den Brüh- und Pumpvorgang erforderliche Elektrik umfasst. Hierzu gibt es im Stand der Technik ausreichend Beispiele, weshalb hier auf diesen verwiesen wird.

Fig. 1 zeigt den Schnitt durch eine erfindungsgemäße Brühvorrichtung 1 mit einem oberen Brühkammerteil 2 und einer Wechselkassette 3, die in einem Gehäuse 4 angeordnet sind. Der obere Brühkammerteil 2 besteht aus einer Überdruckventilplatte 85, einem oberen Funktionsteil 5, einer innenliegenden Ventileinheit 6 und einer Druckplatte 7. Dabei ist das obere Funktionsteil 5 derart ausgeformt, dass es die in der Druckplatte 7 aufgenommene Ventileinheit 6 abdeckt und die Schaltwelle 8 aufnimmt. In dem Funktionsteil 5 sind weiter ein Zulaufanschluss für Brühwasser 9 und ein Auslaufanschluss für Heißwasser 10 ausgebildet. Am Zulaufanschluss 9 und am Auslaufanschluss 10 ist an den offenliegenden Enden jeweils ein umlaufender Kragen 11 vorhanden, der den Anschluss und die Befestigung der Brühwasserleitungen erleichtert. Außerhalb der Ventileinheit 6 liegt das Funktionsteil 5 an der Druckplatte 7 an und umfasst mit seiner Außenkante seitliche die Lippendichtung 15, die im Außenbereich zwischen dem oberen Funktionsteil 5 und der Druckplatte 7 fixiert ist und in axialer Richtung nach unten teilweise über die Druckplatte 7 übersteht. Die Druckplatte 7 weist einen ringförmig umlaufenden, in axialer Richtung nach unten vorstehenden Steg 16 auf, der als einzigster Teil der Druckplatte 7 nach unten über die Lippendichtung 15 übersteht. In der Mitte der Druckplatte 7 ist ein Zapfen 30 angeordnet, an dem ein sich seitlich erstreckendes nach unten gerichtetes Federelement zum Positionieren und Abhalten des Kaffeepads befestigbar ist.

Die Druckplatte 7 des oberen Brühkammerteils 2 bildet zusammen mit der Wechselkassette 8 eine Brühkammer 18. Zum Ausbilden der Brühkammer 18 weist dazu die Wechselkassette 3 eine Vertiefung auf, in deren Mitte sich der Brühkammerauslass 19 befindet. Im Seitenbereich weist die Vertiefung einen ersten Absatz 20 auf, der mit dem Steg 16 der Druckplatte 7 das Kaffeepad fixiert. An diesen Absatz 20 schließt sich in Form eines weiteren Absatzes ein Vorsprung 21 an, der mit der gegenüber dem Steg 16 zurückversetzten Lippendichtung 15 zusammenwirkt, um die Brühkammer 18 abzudichten. Der umlaufende Vorsprung 21 bildet dabei gleichzeitig die Oberkante der Wechselkassette 3. Die Wechselkassette 3 weist an einer Seite einen nicht dargestellten Griff auf, mit dem die Wechselkassette 3 in der Öffnungsstellung aus der Brühvorrichtung 1 herausgezogen werden kann. Dazu hat das Gehäuse 4 an der Seite des Griffes eine entsprechende Öffnung. Die Wechselkassette 3 kann auch in einem gewendeten Zustand, d. h. die Ober- und Unterseite der Wechselkassette 3 sind vertauscht, in die Brühvorrichtung 1 eingesetzt werden. Dabei weist die in Fig. 1 als Unterseite der Wechselkassette 3 dargestellte Seite eine kleinere Vertiefung als die Oberseite auf, wodurch sich mit dieser Unterseite eine Brühkammer 18 mit einem verringerten Volumen bilden lässt. Um die Wechselfähigkeit zu ermöglichen sind auch auf der Unterseite der Wechselkassette 3 im seitlichen Bereich der Vertiefung der Absatz 20 und der Vorsprung 21 ausgebildet.

Die Wechselkassette 3 stützt sich auf ihrer Unterseite mit dem äußeren Absatz 21 auf der Abstützplatte 23 ab, die seitlich eine Verlängerung des Gehäuses 4 bildet und mit diesem verbunden ist. Die Abstützplatte 23 weist mittig einen Ablauf 26 mit einem nach unten gezogenen Spritzschutz 27 auf. Unterhalb des Spritzschutzes befindet sich ein Sieb 24 mit einem darunter angeordneten Ablaufkegel 25, die gemeinsam für einen cremigen Kaffee sorgen. Der Auslauf 28 ist in einer Vertiefung der Abstützplatte 23 eingeschraubt, die durch den sich in axialer Richtung erstreckenden Ringabschnitt 29 der Abschnittsplatte 23 gebildet wird. Der Ringabschnitt 29 ist zum Aufnehmen des Auslaufes 28 mit einem Innengewinde versehen. Der Auslauf 28 leitet den Kaffee zwei Auslauftüllen zu.

Seitlich des Auslaufes 28 ist ein Heißwasser-Auslaufrohr 80 mit einem Heißwasserkanal 81 angeordnet. Das Heißwasser-Auslaufrohr 80 geht in einen Vorsprung 82 über, bzw. ist mit diesem Vorsprung 82 verbunden, der sich seitlich von der Abstützplatte 23 erstreckt und gegenüber dem Gehäuse 4 vorsteht. Der Heißwasserkanal 81 geht durch den Vorsprung 82 hindurch und mündet oberhalb des Vorsprungs 82 seitlich des Gehäuses 4 in einem Heißwasser-Anschlussrohr 83, das am Ende mit einem Kragen 11 versehen ist, um den sicheren Anschluss einer nicht gezeigten Heißwasserleitung zu erleichtern. Das Heißwasser-Auslaufrohr 80 ist mit einer dekorierten Hülse 84 versehen, die auf das Heißwasser-Auslaufrohr 80 aufgeschoben ist.

Um das obere Brühkammerteil 2 in axialer Richtung zu bewegen, ist das obere Funktionsteil 5 mit einem sich in axialer Richtung erstreckenden ringförmig ausgebildeten Aufdrückteil 31 verbunden. Am Außenumfang des Aufdrückteils 31 ist ein Führungssteg 32 ausgebildet, der sich wendelförmig um den Außenumfang des Aufdrückteils 31 erstreckt. Bevorzugt ist der Führungssteg 32 in mindestens drei sich wiederholenden Abschnitten unterteilt, wodurch sich die gleiche Anzahl an Angriffspunkten für die Übertragung der axialen Bewegung ergibt. Um den Außenumfang des Aufdrückteils 31 ist weiter das Betätigungsteil 33 platziert, das sich oberhalb des Führungsstegs 32 bis zur Oberkante des Gehäuses erstreckt. Das ebenfalls ringförmig ausgebildete Betätigungsteil 33 ist rampenförmig gestaltet und drehbar um das Aufdrückteil 31 angeordnet. Durch einen Öffnungsschlitz 35 an der Stirnseite des Gehäuses 4 ist das Betätigungsteil mit einem Handgriff 36 verbunden. Das Betätigungsteil 33 weist weiter einen Haken 34 auf, der den Führungssteg 32 umgreift. Der Führungssteg 32 umfasst weiter einen waagrechten Stegteil, der in der Brühstellung mit dem Haken 34 des Betätigungsteils 33 in Verbindung steht, um die beim Brühen entstehenden Druckkräfte in vertikaler Richtung weiterzuleiten. Des Weiteren weist der Führungssteg 32 einen horizontalen Stegteil auf, der am unteren Ende des wendelförmigen Führungsstegs 32 angeordnet ist und als Anschlag der Hubeinrichtung für die Öffnungsstellung der Brühvorrichtung 1 dient. Der Handgriff 36 ist zusätzlich mittels des Übertragungsbügels 37 mit der Schaltwelle 8 verbunden, wobei eine kreisabschnittsförmige Öffnung 38 am Ende des Übertragungsbügels 37 auf dem einseitig abgeflachten Ende 12 der Schaltwelle 8 sitzt, und dadurch die Betätigung der Schaltwelle 8 direkt mit der Drehung des Betätigungsteils 33 durch den Handgriff 36 koppelt.

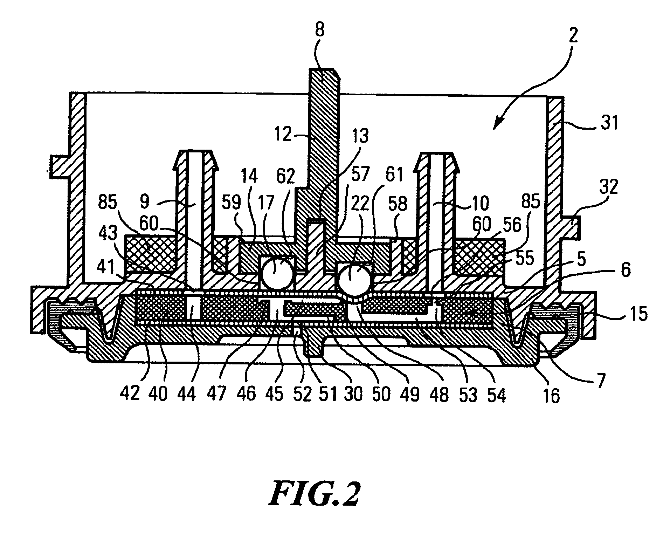

Anhand der vergrößerten Darstellung des oberen Brühkammerteils 2 in Fig. 2 ist insbesondere die Ausgestaltung der Ventileinheit 6 zu erkennen. Die Ventileinheit 6 besteht aus der Kanalplatte 40 und einer oberen Membran 41, die zwischen der Kanalplatte 40 und im oberen Funktionsteil 5 angeordnet ist, sowie einer unteren Membran 42, die sich zwischen der Kanalplatte 40 und der Druckplatte 7 befindet. Im Bereich des Zulaufanschlusses 9 weist die obere Membran 41 ein Zulaufloch 43 und die Kanalplatte 40 eine Zulaufbohrung 44 auf. Dabei sind der Zulaufkanal für Brühwasser des Zulaufanschlusses 9, das Zulaufloch 43 und die Zulaufbohrung 44 koaxial zueinander angeordnet, wobei das Zulaufloch 43 in der Membran 41 einen leicht größeren Querschnitt als die Zulaufbohrung 44 und der Zulaufkanal aufweist, um auch bei einer etwas versetzten Anordnung des Zulaufkanals, des Zulauflochs 43 und der Zulaufbohrung 44 eine Brühwasser-Zulaufführung ohne Einschnürung zu ermöglichen. Die Zulaufbohrung 44 der Kanalplatte 40 steht mit der Verteilervertiefung 45 in Verbindung, die mittig auf der Oberseite der Kanalplatte 40 angeordnet ist. Die Verteilervertiefung 45 weist in ihrem Randbereich die Auslassbohrung 46 mit dem in die Verteilervertiefung 45 vorspringenden Auslassring 47 und die Auslaufbohrung 48 mit dem in die Verteilervertiefung 45 vorspringenden Auslaufring 49 auf. Die Auslassbohrung 46 und die Auslaufbohrung 48 erstrecken sich von der Oberseite der Kanalplatte 40 zur Unterseite der Kanalplatte 40. Auf der Unterseite der Kanalplatte 40 ist mittig die Auslassvertiefung 50 angeordnet, die mit der Auslassbohrung 46 in Verbindung steht und mindestens ein, hier drei Auslasslöcher 51 in der unteren Membran 42 aufweist, die mit ebenfalls mindestens einer, hier drei Auslassöffnungen 52 in der Druckplatte 7 in Verbindung stehen, um das Einleiten des Brühwassers in die Brühkammer 18 zu ermöglichen. Die Auslaufbohrung 48 steht über den Auslaufkanal 53 mit der Drosselbohrung 54 in Verbindung, die auf der Oberseite der Kanalplatte 40 eine Drosselblende 55 aufweist, und über das Auslaufloch 56 in der oberen Membran 41 in den Auslaufkanal des Auslaufanschlusses 10 mündet. Der Auslaufkanal, die Auslaufbohrung 56, die Drosselblende 55 und Drosselbohrung 54 sind koaxial zueinander angeordnet, wobei das Auslaufloch 56 gegenüber der Drosselbohrung 54 und dem Auslaufkanal ein leicht vergrößerten Durchmesser aufweist.

Auch die Ausgestaltung der Schaltwelle 8 ist deutlich in Fig. 2 dargestellt. Die Schaltwelle 8 ist durch eine zentrierte Bohrung 13 am Schaltende 14 drehbar auf einem von dem oberen Funktionsteil 5 vorstehenden Wellenvorsprung 57 gelagert. Das dem abgeflachten Ende 12 gegenüberliegende Schaltende 14 weist einen deutlich größeren Querschnitt als der Rest der Schaltwelle 8 auf und ist durch einen vom oberen Funktionsteil 5 vorstehenden Ring 58 geführt und mittels am Ring 58 ausgebildeter Rastelemente 59 in seiner Position gesichert. Das Schaltende 14 der Schaltwelle 8 weist neben der zentralen Bohrung 13 zwei in das Schaltende 14 hinein axial zueinander versetzte Schaltflächen 61, 62 auf, die auf die Betätigung der Ventilkugeln 17, 22 abgestimmt sind, die in zwei Bohrungen 60 im oberen Funktionsteil 5 geführt und auf der oberen Membran 41 im Bereich der Verteilervertiefung 45 oberhalb der Auslassbohrung 46 und der Auslaufbohrung 48 angeordnet sind. Die Ventilkugeln 17, 22 bilden zusammen mit der oberen Gummimembran 41, der Verteilervertiefung 45, der Auslassbohrung 46 mit Auslassring 47 und der Auslaufbohrung 48 mit Auslaufring 49 das Verteilerventil. Durch das Verteilerventil kann innerhalb der Ventileinheit 6 zwischen dem Auslass von Brühwasser in die Brühkammer und dem Auslauf von Heißwasser umgeschaltet werden.

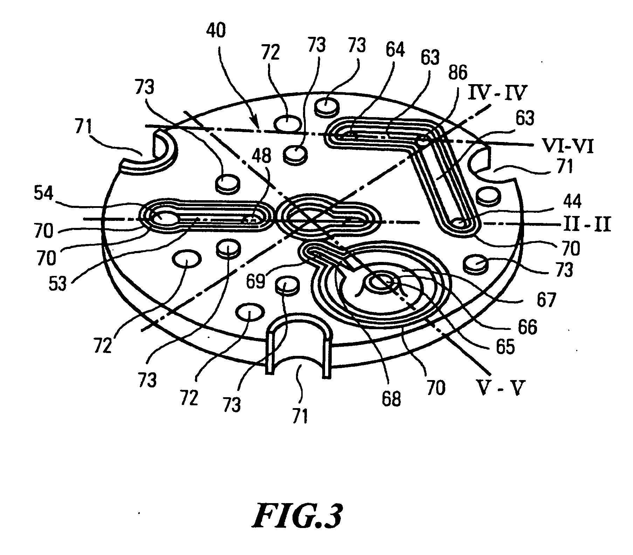

Fig. 3 zeigt eine perspektivische Darstellung der Unterseite der Kanalplatte 40. Entlang der Linie II - 11 sind die bereits oben beschriebenen und in Fig. 2 im Schnitt dargestellten Kanalabschnitte, Durchgangsbohrungen und Vertiefungen der Kanalplatte 40 zusehen. Die Zulaufbohrung 44 mündet auf der Unterseite der Kanalplatte 40 in den Überlaufkanal 63 der sich in einem Winkel an der Überdruckbohrung 86 vorbei bis zur Überlaufbohrung 64 erstreckt. In dem in Fig. 3 vorne dargestellten Bereich der Unterseite der Kanalplatte 40 ist eine Durchlaufbohrung 65 angeordnet, die von einem Drucksteg 66 umgrenzt ist, der wiederum von einer Durchlaufvertiefung 67 in der Kanalplatte 40 umgeben ist. Die Durchlaufvertiefung 67 mündet über den Verteilerkanal 68 in der Verteilerbohrung 69, die auf der Oberseite der Kanalplatte 40 in die Verteilervertiefung 45 mündet. Alle auf der Unterseite der Kanalplatte 40 offenen brühwasserführenden Elemente, der Überlaufkanal 63 mit der Überdruckbohrung 86, der Überlaufbohrung 64 und der Zulaufbohrung 44, die Durchlaufvertiefung 67 mit dem Verteilerkanal 68 und der Verteilerbohrung 69, die Auslassvertiefung 50 mit der Auslassbohrung 46 sowie der Auslaufkanal 53 mit der Auslaufbohrung 48 und der Drosselbohrung 54, sind auf der Oberfläche der Kanalplatte 40 mit zwei nebeneinander angeordneten Rippen 70 versehen, die mit einer entsprechenden Gegenrippe auf der Druckplatte 7 zusammenwirken, um in Verbindung mit der unteren Membran 42 eine möglichst große Dichtwirkung zueinander und gegenüber der Umgebung zu bewirken. Die auf der Oberseite der Kanalplatte 40 angeordneten Kanalabschnitte und Durchgangsbohrungen sind in entsprechender Weise mit zwei umlaufenden Rippen versehen, die mit einer entsprechenden Gegenrippe auf der Unterseite des oberen Funktionsteils 5 zusammenwirken.

Die Kanalplatte 40 weist weiter drei auf dem Umfang der Kanalplatte versetzt angeordneten Ausnehmungen 71 sowie mehrere Positionierungsbohrungen 73 in der Kanalplatte 40 selbst auf, die die Kanalplatte 40 in Bezug auf die Druckplatte 7 positionieren. Durch die Positionierungsbohrungen 72 erstrecken sich von der Druckplatte 7 mehrere Bolzen bis in den oberen Funktionsteil 5 hinein, wodurch insgesamt eine feste Positionierung der Druckplatte 7, der unteren Membran 42, der Kanalplatte 40, der oberen Membran 41 und dem oberen Funktionsteil 5 zueinander gewährleistet wird. Auf der Unterseite der Kanalplatte 40 sind weiter mehrere Bolzenabschnitte 73 angeordnet, die in der Stärke der unteren Membran 42 von der Unterfläche der Kanalplatte 40 vorstehen und zusätzlich zu den Positionierungsbohrungen 72 und den Ausnehmungen 71 die Anordnung der unteren Membran 42 auf der Unterseite der Kanalplatte 40 unterstützen und auch ein örtliches Verrutschen, Verschieben, Stauchen oder Strecken der gummielastischen Membran 42 im Wesentlichen verhindern. Die Oberseite der Kanalplatte 40 ist ebenfalls mit entsprechenden Bolzenabschnitten 73 versehen, um die obere Membran 41 möglichst sicher zu fixieren.

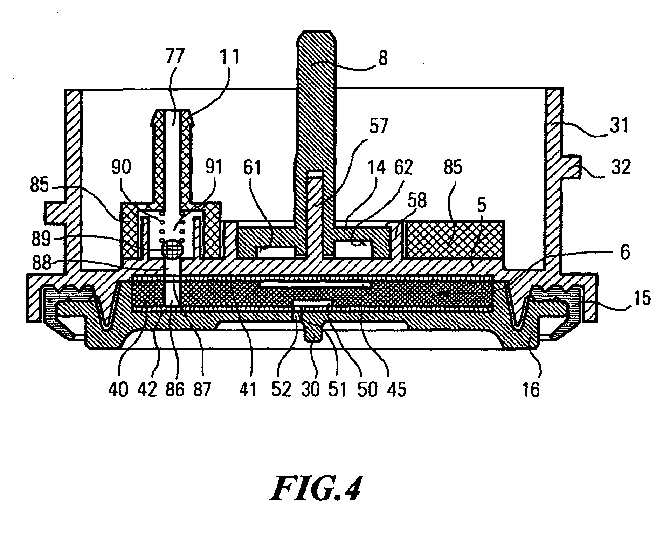

Fig. 4 zeigt noch einen Schnitt durch den oberen Brühkammerteil 2 entlang der in Fig. 3 dargestellten Linie IV - IV. Auch hier ist wiederum die zwischen der Druckplatte 7 und dem oberen Funktionsteil 5 angeordnete Ventileinheit 6 aus Kanalplatte 40 sowie der oberen und unteren Membran 41, 42 gezeigt. Auf der Oberseite der Kanalplatte 40 ist mittig wieder die Verteilervertiefung 45 zu sehen, während auf der Unterseite mittig die Auslassvertiefung 50 in Verbindung mit dem Auslaufloch 51 in der unteren Membran 42 und der seitlich des Zapfens 30 in die Brühkammer 18 mündenden Auslassöffnung 52. Weiter ist die sich von der Unterseite der Kanalplatte 40 zur Oberseite hin erstreckende Überdruckbohrung 86 zu sehen, die über den Überlaufkanal 63 mit der Zulaufbohrung 44 in Verbindung steht. Auf der Oberseite der Kanalplatte 40 ist die obere Membran 41 mit einem Überdruckloch 87 versehen. Oberhalb der Membran 41 ist im oberen Funktionsteil 5 eine Überdruckventilbohrung 88 eingearbeitet, die im Wesentlichen koaxial mit der Überdruckbohrung 86 und dem Überdruckloch 87 ausgerichtet ist. Die Überdruckventilbohrung 88 ist mit einer Überdruckventilkugel 89 verschlossen. Diese Ventilkugel 89 wird durch eine schraubenförmige Druckfeder 90, die sich gegen die Überdruckventilplatte 85 abstützt, auf die Überdruckventilbohrung 88 gedrückt. Die Überdruckventilkugel 89 ist gegen die Vorspannkraft der Druckfeder 90 in einen Ventilraum 91 bewegbar, der in der Überdruckventilplatte 85 ausgebildet ist und nach unten hin durch das obere Funktionsteil 5 begrenzt ist. Der Ventilraum 91 mündet in den Überlaufkanal des Überlaufanschlusses 77. Auch der Überlaufkanal 63 ist an seinem offen liegendem Ende wieder mit einem umlaufenden Kragen 11 versehen, der den Anschluss und die Befestigung einer Überlaufleitung erleichtert.

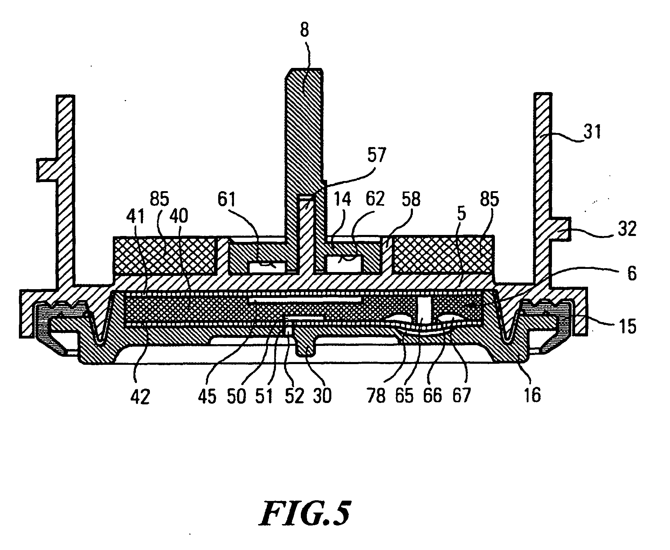

Fig. 5 zeigt einen weiteren Querschnitt durch den oberen Brühkammerteil, entlang der in Fig. 3 dargestellten Linie V - V. Auch hier ist wieder die zwischen oberen Funktionsteil 5 und der Druckplatte 7 angeordnete Ventileinheit 6 aus Kanalplatte 40 und oberer und unterer Membran 41, 42 dargestellt. Mittig auf der Oberseite der Kanalplatte 40 ist die Verteilervertiefung 45 angeordnet, während auf der Unterseite die Auslassvertiefung 50 mit dem Auslassloch 51 in der unteren Membran 42 und der Auslassöffnung 52 in der Druckplatte 7 dargestellt ist. Weiter ist die sich von der Oberseite der Kanalplatte 40 zur Unterseite erstreckende Durchlaufbohrung 65 mit dem gegenüber der Unterseite der Kanalplatte 40 vorstehenden Druckring 66 zusehen. Der vorstehende Druckring 66 bewirkt eine nach unten in die in der Druckplatte 7 ausgebildete Durchlaufwölbung 78 Durchbiegung der unteren Membran 42. Seitlich des Druckrings 66 und oberhalb der unteren Membran 42 befindet sich um den Druckring 66 herum die Durchlaufvertiefung 67, die sich über den Verteilerkanal 68 in die Verteilerbohrung 69 erstreckt.

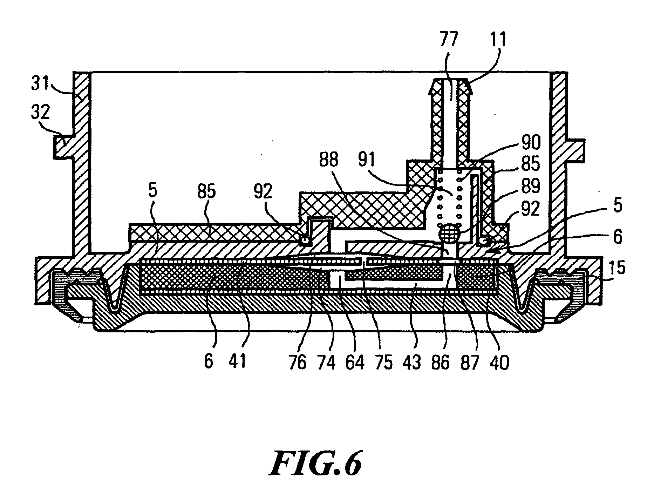

Fig. 6 zeigt noch einen weiteren Querschnitt durch den oberen Brühkammerteil, entlang der in Fig. 3 dargestellten Linie VI - VI. Wiederum ist die zwischen dem oberen Funktionsteil 5 und der Druckplatte 7 angeordnete Ventileinheit 6 aus Kanalplatte 40 und oberer und unterer Membran 41, 42 dargestellt, aber auch das Überdruckventil zwischen dem oberen Funktionsteil 5 und der Überdruckventilplatte 85. Im Gegensatz zu den in Fig. 2, Fig. 4 und Fig. 5 dargestellten Querschnitten verläuft dieser Querschnitt seitlich versetzt und nicht mittig durch den oberen Brühkammerteil 2. An der Unterseite der Kanalplatte 40 ist ein Teil des Überlaufkanals 63 dargestellt, der die Zulaufbohrung 44 mit der Überdruckbohrung 86 und der Überlaufbohrung 64 verbindet. Die Überdruckbohrung 86 und die Überlaufbohrung 64 erstrecken sich von der Unterseite der Kanalplatte 40 zu dessen Oberseite. Die Überdruckbohrung 86 erstreckt sich weiter über das Überdruckloch 87 in der oberen Membran 41 in die Überdruckventilbohrung 88 im oberen Funktionsteil 5 und von dort weiter in den Ventilraum 91 zwischen der Überdruckventilplatte 85 und dem oberen Funktionsteil 5. Dabei ist die Überdruckventilbohrung 88 gegenüber dem Ventilraum 91 mit der durch die Druckfeder 90 vorgespannten Überdruckventilkugel 89 erschlossen. Der Ventilraum 91 ist durch eine Ringdichtung 92, die zwischen dem oberen Funktionsteil 5 und der Überdruckventilplatte 85 angeordnet ist, gegenüber der Umgebung abgedichtet, wobei die Ringdichtung 92 sowohl die Überdruckventilbohrung 88 im oberen Funktionsteil 5 als auch den Austritt des Überlaufventils einfasst. Auf der Oberseite der Kanalplatte 40 verbreitet sich die Überlaufbohrung 64 zur Überlaufvertiefung 74. Die obere Membran 41 weist im Bereich der Überlaufvertiefung 74 seitlich versetzt zur Überlaufbohrung 64 ein Überlaufloch 75 auf, das vom Durchmesser so dimensioniert ist, dass es einen drucklosen Ablauf von kaltem Brühwasser oder den Erwärmungsüberlauf aus dem Boiler gerade noch zulässt. Oberhalb der Membran 41 ist im oberen Funktionsteil 5 eine Überlaufauswölbung 76 eingearbeitet, die sich im Wesentlichen oberhalb der Überlaufvertiefung 74 in der Kanalplatte 40 erstreckt und dabei mit einer konkaven Wölbung und einem kreisförmigen Querschnitt ausgebildet ist. Die Überlaufauswölbung 76 ist mit dem Ventilraum 91 verbunden, der sich in den Überlaufkanal des Überlaufanschlusses 77 hinein erstreckt. Die Überlaufauswölbung 76 und die Überlaufbohrung 64, sowie bevorzugt auch die Überlaufvertiefung 74, sind koaxial zueinander ausgerichtet, während das Überlaufloch 75 versetzt zur Überlaufbohrung 64 und dem Überlaufkanal des Überlaufanschlusses 77 angeordnet ist. Die Überlaufeinheit aus den Überlaufventil, dem aus Druckfeder 90, Überdruckventilkugel 89 und Überdruckventilbohrung 88 gebildeten Überdruckventil und dem die Ventile miteinander verbindende Ventilraum 91 mündet ausgangsseitig im gemeinsamen Überlauf 77.

In der Benutzung der erfindungsgemäßen Brühvorrichtung 1 kann in der Öffnungsstellung, in der das obere Brühkammerteil 2 durch das Betätigungsteil 33 und das Aufdrückteil 31 in eine obere Endstellung gefahren ist, die auf der Abstützplatte 23 aufliegende Wechselkassette 3 aus der Brühvorrichtung 1 entnommen werden, um die ausgewählte Vertiefung der Wechselkassette 3 mit einem bzw. gegebenenfalls zwei Filterkissen zu beladen. In der in Fig. 1 gezeigten Stellung wird die obere Stellung üblicherweise mit zwei Kaffeepads, bzw. einem Kaffeepad mit einer doppelten Menge an gemahlenen Kaffee, versehen. Die beladene Wechselkassette 3 wird wieder in die Brühvorrichtung 1 eingeschoben. Nach Beendigung des Beladevorgangs wird die Brühvorrichtung mit dem Handgriff 36 in die Brühstellung überführt. Dabei wird der Handgriff 36 um die vertikale Achse A geschwenkt und das mit ihm verbundene Betätigungsteil 33 und die Schaltwelle 8 um diese vertikale Achse A gedreht. Das Betätigungsteil 33 drückt mit seinem rampenförmig ausgebildeten Abschnitt auf den wendelförmigen Führungssteg 32, wobei sich der Kontakt zwischen dem Betätigungsteil 33 und dem Führungssteg 32 mit zunehmender Bewegung in Richtung der Brühstellung verringert. Durch den Druck auf den Führungssteg 32 wird das obere Brühkammerteil 2 in vertikaler Richtung auf die Wechselkassette 3 gedrückt. Bei dieser Schließbewegung berührt zunächst die Lippendichtung 15 den oberen Vorsprung 21. Als nächstes berührt der ringförmig umlaufende, von der Druckplatte 7 axial vorstehende, Steg 16 den oberen Absatz 20 der Wechselkassette 3, wobei sich die Lippendichtung 15 weiter an den Vorsprung 21 andrückt. Bei einer Zunahme des axialen Drucks über den Steg 16 auf die Wechselkassette 3 wird der untere Vorsprung auf die Abstützplatte 23 gedrückt. Durch den Eingriff des ringförmigen, axial vorstehenden Stegs 16 in den oberen Absatz 20 wird während des Schließvorgangs die Lage der Wechselkassette 3 vom oberen Brühkammerteil 2 ausgerichtet. Während des Schließens der Brühkammer 18 drückt die Druckplatte 7 mit einem am Zapfen 30 angeordneten Federelements das Kaffeepad gleichmäßig in die Vertiefung der Wechselkassette 3. Dadurch entsteht zwischen dem Kaffeepad und der Druckplatte 7 ein sich über einen großen Bereich der Druckplatte 7 radial erstreckender Hohlraum. In der Brühstellung ist die aus der Druckplatte 7 und der Vertiefung der Wechselkassette 3 gebildete Brühkammer 18 durch den auf den Absatz 20 drückenden Steg 16 und die auf den Vorsprung 21 drückende Lippendichtung 15 dicht gegenüber der Umgebung abgeschlossen.

Beim Schwenken des Handgriffs 36 um die vertikale Achse A wird über den Übertragungsbügel 37 auch die Schaltwelle 8 um die vertikale Achse A gedreht. Dabei ist die Stellung der Schaltwelle 8 durch dessen abgeflachtes Ende 12 und die kreisabschnittsförmigen Öffnung 38 am Ende des Übertragungsbügels 37 fest mit der Stellung des Handgriffs 36 und damit mit der Stellung des oberen Brühkammerteils 2 verbunden. In der nicht gezeigten Offenstellung der Brühkammer drückt die axial vorstehende Schaltfläche 61 die Ventilkugel 17 auf den Auslassring 47 der Auslassbohrung 46 und verschließt durch die obere Membran 41 die Auslassbohrung 46 und verhindert so den Eintritt von Brühwasser in die Brühkammer 18. In dieser Stellung steht die axial zurückversetzte Schaltfläche 62 über der zweiten Ventilkugel 22 ohne sie auf die obere Membran 41 zu drücken. Dadurch ist die Verbindung zwischen der Verteilervertiefung 45 und der Auslaufbohrung 48 geöffnet und es kann bei Bedarf Brühwasser aus dem Auslaufanschluss 10 entnommen werden. In der in Fig. 1 und Fig. 2 gezeigten Brühstellung der Brühvorrichtung 1 schließt die zweite Ventilkugel 22 durch den Druck der axial vorstehenden Schaltfläche 61 die Auslaufbohrung 48 durch den Druck der oberen Membran 41 auf den Auslaufring 49, während die Auslassbohrung 46 gegenüber der Verteilervertiefung 45 offen ist und bei einer Förderung des Brühwassers durch eine Pumpe dem Austritt des Brühwassers durch die Auslassöffnung 52 in die Brühkammer 18 hinein ermöglicht. Dabei sind die Schaltflächen 61 und 62 so zueinander angeordnet, dass die Auslassbohrung 46 erst in dem Moment geöffnet wird, in dem die Lippendichtung 15 während der Schließbewegung den oberen Vorsprung 21 berührt und eine Abdichtung der Brühkammer 18 gegenüber der Umgebung gewährleistet. So kann das Brühwasser auch bei bereits eingeschalteter Pumpe erst dann in die Brühkammer 18 einströmen, wenn die Brühkammer 18 abgedichtet ist. Dadurch wird verhindert, dass bei einer unzureichend geschlossenen Brühkammer 18 das Brühwasser aus dieser auslaufen kann, weil die Abdichtung der Lippendichtung 15 zum oberen Vorsprung 21 der Wechselkassette 3 noch nicht sicher wirkt. Die Schaltflächen 61 und 62 sind weiter so zueinander angeordnet, dass bei einer Zwischenstellung des Handgriffs 36, bzw. der Schaltwelle 8, sowohl die Auslassbohrung 46 als auch die Auslaufbohrung 48 durch die obere Membran 41 verschlossen sind. So kann gewährleistet werden, dass bei einer versehentlich nicht vollständig geschlossenen Brühkammer oder durch ein unbeabsichtigtes Auslösen des Brühvorgangs Brühwasser seitlich aus der Brühkammer 18 herausspritzt und zu einer Gefährdung des Nutzers führt. Demgegenüber ist der Heißwasserauslauf aus der Kanalplatte 40 nur in der Offenstellung der Brühkammer möglich.

Im Folgenden wird nunmehr die Wirkungs- und Funktionsweise der obenbeschriebenen Brühvorrichtung 1 näher erläutert.

Bei der Inbetriebnahme einer Kaffeemaschine befindet sich sowohl im Kanal des Zulaufanschlusses 9 für das Brühwasser als auch in der Kanalplatte 40 Luft, Kondensat und/oder abgekühltes Brühwasser. Die Ventileinheit 6 befindet sich dabei ebenso wie die umgebenden Teile des oberen Brühkammerteils 2 auf der Temperatur der Umgebung. Das Überlaufventil aus Überlaufvertiefung 74, der oberen Membran 41 mit dem Überlaufloch 75 und der Überlaufauswölbung 76 im oberen Funktionsteil 5 gibt den Überlaufanschluss 77 frei. Dabei kann Wasser und Luft von der Überlaufbohrung 64 seitlich in die Überlaufvertiefung 74 und durch das Überlaufloch 75 in der Membran 41 in den Seitenbereich der Überlaufwölbung 76 und von dort über den Ventilraum 91 in den Überlaufanschluss 77 strömen. Nach der Inbetriebnahme der Kaffeemaschine wird das Brühwasser in einer Boilervorrichtung erwärmt. Durch die mit steigender Temperatur zunehmende Ausdehnung des Brühwassers wird erwärmtes Brühwasser durch den Zulaufanschluss 9 in die Ventileinheit 6 gefördert. Das erwärmte Brühwasser ersetzt dabei die bisher in diesen Leitungen stehende Luft, Kondensat und/oder abgekühltes Brühwasser die drucklos, oder bis zu einem Überdruck von 0,5 bar, durch das Überlaufventil und den Überlaufanschluss 77 aus dem oberen Brühkammerteil 2 herausgeführt werden. Bis zum Erreichen einer für einen Brühvorgang oder einer Heißwasserentnahme ausreichende Temperatur wird auch ein Teil des bereits erwärmten Brühwassers über das Überlaufventil und den Überlaufanschluss 77 aus dem oberen Brühkammerteil 2 herausgefördert. Dadurch wird die Ventileinheit 6 und die sie umgebenden Elemente des oberen Brühkammerteils 2 erwärmt. Dabei ist die Ausdehnung des Brühwassers in der Boilervorrichtung so gering und gleichmäßig, dass sich im Überlaufventil eine Strömungsgeschwindigkeit bzw. ein Druck ausbildet, der nicht ausreicht, die obere Membran 41 in die konkave Überlaufauswölbung 76 zu drücken und durch das Anliegen der Membran an der Wandung der Überlaufauswölbung 76 das Überlauflochs 75 in der Membran 41 zu verschließen. In diesem Betriebszustand bleibt daher der Überlaufanschluss 77 offen und in der Ventileinheit 6 kann sich kein Druck aufbauen. Beim Erwärmen des Brühwassers in der Boilervorrichtung wird ein kleiner Strom des erwärmten Brühwassers über die Ventileinheit 6 geleitet, der beim Abkühlen des Brühwassers aus einem Wasservorratsbehälter in die Boilervorrichtung nachgeführt wird, wodurch sich auch in einem Stand-By-Modus die Ventileinheit 6 nicht vollständig abkühlt und in der Ventileinheit 6 ständig erwärmtes Brühwasser für die Zubereitung von Kaffee bereitsteht. Das Überlaufventil ermöglicht den Ablauf von Kondensat und abgekühlten Brühwasser sowohl in der Brühstellung der Brühvorrichtung 1, als auch in der Stellung zum Zapfen von Heißwasser.

Sobald zum Starten des Brühvorgangs oder zur Entnahme von Heißwasser von einer Pumpe heißes Brühwasser über den Zulaufanschluss 9 in die Ventileinheit 6 gedrückt wird, schließt sich das Überlaufventil durch den in der Ventileinheit 6 angestiegenen Druck. Dabei wird die obere Membran 41 gegen die Wandung der Überlaufauswölbung 76 im oberen Funktionsteil 5 gedrückt, wodurch das Überlaufloch 75 in der Membran 41 abgedichtet wird. Dabei ist die in der Kanalplatte 40 ausgebildete Überlaufvertiefung 74 nicht nur für die Zuleitung des Wassers zum Überlaufloch 75 bei einem geöffneten Überlaufventil verantwortlich, sondern auch für die Ausbildung eines ausreichenden Drucks auf die Membran 41 und einer möglichst gleichmäßigen Verteilung dieses Drucks in einem mit Druck beaufschlagten Zustands, um ein sicheres Anliegen der Membran an der Wandung der Überlaufwölbung 76 und damit ein sicheres Verschließen des Überlaufventils zu gewährleisten.

Beim Druckanstieg in der Ventileinheit 6 öffnet das Durchlaufventil aus Durchlaufbohrung 65, vorstehendem Druckring 66, der unteren Membran 42, der Durchlaufauswölbung 78 und der Durchlaufvertiefung 67. Im drucklosen Zustand ist das Durchlaufventil geschlossen, da die Gummimembran 42 durch die Einspannung zwischen Druckplatte 7 und Kanalplatte 40 fest auf den gegenüber der Unterseite der Kanalplatte 40 vorstehenden Druckring 66 gedrückt wird. Bei dem durch die Pumpe bewirkten Druckanstieg in der Ventileinheit 6 wird die Membran 42 nach unten in die Durchlaufwölbung 78 gedrückt, wodurch sich zwischen Druckring 66 und der Gummimembran 42 ein Spalt öffnet, durch den das Brühwasser in die Durchlaufvertiefung 67 und von dort über den Verteilerkanal 68 und die Verteilerbohrung 69 in die Verteilervertiefung 45 strömen kann.

Wenn der Handgriff 36 sich weder in der vollständig geöffneten Stellung noch in der vollständig geschlossenen Stellung befindet, ist sowohl die Auslassbohrung 46 als auch die Auslaufbohrung 48 durch den Druck der Schaltflächen 61 und 62 über die Ventilkugeln 17 und 22 auf die obere Membran 41 geschlossen, so dass sich in der Ventileinheit 6 der Druck weiter erhöht, bis sich die Überdruckventilkugel 89 gegen die Vorspannung der Druckfeder 90 von der Überdruckventilbohrung 88 ablöst und einen weiteren Druckanstieg verhindert. Das Brühwasser strömt dann direkt von der Zulaufbohrung 44 über den Überlaufkanal 63 und die Überdruckbohrung 86 in den Überlaufkanal des Überlaufanschlusses 77 und von dort zurück in einen Vorratsbehälter oder in einen Abfluss.

In der in Fig. 1 dargestellten Brühstellung sind ein oder zwei Filterpads in der Brühkammer 18 angeordnet. Ein umlaufender Verriegelungsrand des oberen Filterpads liegt dabei auf der Oberseite des oberen Absatzes 20 auf und befindet sich demnach in der Brühstellung zwischen dem Absatz 20 und dem Steg 16. In dieser geschlossenen Brühstellung wird nach der Auslösung des Brühvorgangs von der Pumpe heißes Brühwasser über den Zulaufanschluss 9 der Ventileinheit 6 zugeführt. Da das Überlaufventil durch den Druckanstieg bereits geschlossen ist, strömt das Brühwasser über das geöffnete Durchlaufventil in die Verteilervertiefung 45 und von dort über den Brühwasserauslass in die Brühkammer. Durch die mit der Stellung der Brühkammer gekoppelte Stellung der Schaltwelle 8 ist bei geschlossener Brühstellung der Heißwasserauslauf durch die auf den Auslaufring 49 der Auslaufbohrung drückende Ventilkugel 22 geschlossen, während die Auslassbohrung 46 offen ist und eine Strömung des Brühwassers aus der Verteilervertiefung 45 über die Auslassbohrung 46 in die Auslassvertiefung 50 und von dort über mindestens einem, hier drei Auslasslöcher 51 in der unteren Membran 42 und mindestens einer, hier drei zugeordnete Auslassöffnungen 52 in die Brühkammer 80 hinein zulässt. Das in die Brühkammer 18 eintretende Brühwasser wird auf dem Kaffeepad flächig verteilt. Dabei wird das Kaffeepad zunächst durch das Wasser befeuchtet und im weiteren Verlauf von dem Brühwasser durchströmt, das am Brühkammerauslass 19 aus der Brühkammer 18 als Kaffee austritt und über den Ablauf 26 auf das Sieb 24 auftrifft. Dabei muss sichergestellt werden, dass der als dünner Sprühstrahl auf das Sieb 24 auftreffende Kaffee sofort über den Verteilerkegel 25 abgeführt wird. Durch diese Ausgestaltung bildet sich eine feine Crema aus. Nach einem bestimmten, einstellbaren Zeitraum, bzw. einer geförderten Wassermenge, wird die Pumpe wieder abgeschaltet und damit der Brühvorgang beendet. Bei dem Druckabfall öffnet sich zuerst das Überlaufventil, wodurch sich der Druck rasch abbaut und das Durchlaufventil schlagartig geschlossen wird.

Nach dem Ende des Brühvorgangs kann die Brühkammer 18 durch ein Rückschwenken des Handgriffs 36 wieder geöffnet werden. Beim Rückschwenken des Handgriffs 36 wird das obere Brühkammerteil 2 in axialer Richtung nach oben bewegt, weil der Führungssteg 32 von dem Haken 34 umgriffen wird. Der Haken 34 überträgt die durch die Drehbewegung des Betätigungsteils 32 induzierte axiale Bewegung in Richtung der Öffnungsstellung über den Führungssteg 32 auf das Andrückteil 31 und damit auf das obere Brühkammerteil 2. Beim Öffnen der Brühkammer 18 kann ein am Zapfen 30 angeordnetes Federelement auf das feuchte Kaffeepad drücken und die nach dem Brühvorgang an der Druckplatte 7 anheftenden Bereiche des Kaffeepads lösen, so verbleibt das Kaffeepad beim Öffnen der Brühvorrichtung in der Vertiefung der Wechselkassette 3 und wird nicht zusammen mit dem oberen Teil der Brühkammer nach oben bewegt.

In der nicht dargestellten Öffnungsstellung ist die Druckplatte 7 soweit nach oben bewegt, dass sich der Steg 16 oberhalb der Öffnung für die Wechselkassette 3 im Gehäuse befindet. In dieser Öffnungsstellung kann die Wechselkassette 3 zusammen mit dem verbrauchten, durch das Brühwasser befeuchteten Kaffeepad aus der Brühvorrichtung herausgezogen werden. Nach der Entnahme des verbrauchten Kaffeepads aus der Brühkammervertiefung der Wechselkassette 3 kann die Wechselkassette 3 für einen weiteren Brühvorgang erneut mit einem Kaffeepad versehen werden, oder ungefüllt in die Brühvorrichtung zurückgeschoben werden.

In der Öffnungsstellung ist durch die Stellung der Schaltwelle 8 die Auslassbohrung 46 durch die von der Ventilkugel 17 auf den Auslassring 47 gedrückte obere Membran 41 geschlossen, während die Auslaufbohrung 48 zur Verteilervertiefung 45 hin offen ist. Wird in dieser Offenstellung zur Abgabe von Heißwasser die Pumpe in Betrieb genommen wird nach der Auslösung der Heißwasser-Zapfung heißes Brühwasser über den Zulaufanschluss 9 in die Ventileinheit 6 gedrückt. Das unter Druck stehende Brühwasser schließt das Überlaufventil und öffnet das Durchlaufventil und gelangt durch die Stellung des Verteilerventils aus der Verteilervertiefung 45 in die Auslaufbohrung 48 und von dort in die Drosselbohrung 54. Am Ende der Drosselbohrung 45 ist unmittelbar vor dem Übergang in den Auslaufkanal des Auslaufanschlusses 10 eine Drosselblende 55 angeordnet, die durch ihren Strömungswiderstand bei der Entnahme von Heißwasser in der Ventileinheit 6 einen Druck aufbaut, der wie beim Brühvorgang ein sicheres Verschließen des Überlaufventils gewährleistet. Dabei ist der Durchmesser der Drosselblende 55 bevorzugt so abgestimmt, dass die Pumpe sowohl beim Brühvorgang als auch beim Zapfen von Heißwasser im gleichen Arbeitspunkt betrieben werden kann. Hierdurch kann mit der gleichen Einstellung der elektronischen Steuerung sowohl Kaffee als auch Heißwasser in einer vergleichbaren Menge bereitgestellt werden.

Der Auslaufanschluss 10 für Heißwasser am oberen Brühkammerteil 2 ist mittels eines Kunststoffschlauches mit dem Heißwasser-Auslaufrohr 80 verbunden, das seitlich an der Brühvorrichtung angeordnet und durch den Vorsprung 82 mit der Abstützplatte 23 verbunden ist.

Die Stellung der Schaltwelle 8 in der bei einer geschlossenen Stellung der Brühkammer die Auslassbohrung 46 geöffnet ist, oder in der bei einer Öffnungsstellung die Auslaufbohrung 48 geöffnet ist, umfasst jeweils nur einen sehr engen Winkelbereich am linken Anschlag (Brühstellung) bzw. am rechten Anschlag (Heißwasserstellung) des Handgriffes 36. In diesen beiden Öffnungspositionen strömt das Brühwasser durch das geöffnete Durchlaufventil in die Verteilervertiefung 45 und von dort gemäß der gewählten Position der Schaltwelle 8 in die Brühkammer oder den Heißwasserauslauf. In allen Zwischenpositionen des Handgriffs zwischen diesen beiden Öffnungspositionen sind die Auslassbohrung 46 und die Auslaufbohrung 48 durch die obere Membran 41 verschlossen. Beim Start des Brühvorgangs bzw. des Heißwasserauslaufs würde in dieser Position die Pumpe oder eine andere Fördereinrichtung das Brühwasser gegen das geschlossene Überdruckventil und die geschlossenen Verteilerventile fördern und alle im Eingriff befindlichen Dichtungen und Verbindungsleitungen bis zum maximalen Arbeitsdruck der Pumpe bzw. der Fördereinrichtung beanspruchen. Um solche hohe Beanspruchungen der Komponenten der Brühvorrichtung zu vermeiden, kann das Überdruckventil aus Überdruckventilkugel 89, Druckfeder 90 und Überdruckventilbohrung 88 bei einem für die Bauelemente noch erträglichen Überdruckzustand öffnen und das durch die Pumpe geförderte Brühwasser in einen Vorratsbehälter zurückführen bzw. in einen Ablauf leiten. Das dargestellte Überdruckventil kann mittels der Druckfeder 90 relativ exakt auf einen dritten, oberhalb des Brühzustands liegenden Druckbereich abgestimmt werden. Beim Überschreiten des üblichen Betriebsdrucks zum Brühen oder Heißwasserauslauf, ca. 1,5 bis 1,8 bar, öffnet sich das Überdruckventil in dem die Überdruckventilkugel 89 sich gegen den Federdruck der Druckfeder 90 nach oben in den Ventilraum 91 bewegt und zwischen der Überdruckventilbohrung 88 und der Überdruckventilkugel 89 einen Durchgang für das Brühwasser zum Überlauf 77 freigibt. Das Überdruckventil schließt wieder sobald der Betriebsdruck wieder unterhalb des Überdruckbereich fällt, der bevorzugt oberhalb von 2 bar liegt.

Neben der Überschreitung des üblichen Betriebsdrucks für den Brühvorgang durch das Starten des Brühvorgangs bei einer Stellung der Schaltwelle 8 zwischen den Öffnungspositionen kann der übliche Brühdruck auch durch eine Verstopfung des Brühkammerauslasses 19 im unteren Brühkammerteil 3 oder durch die Verwendung von hoch gefüllten Kaffeepads, aber auch bei einer Verstopfung des Heißwasserauslaufs übersteigen. Diese Störung im normalen Betriebsablauf kann ebenso wie die falsche Bedienung der Brühvorrichtung durch den Nutzer durch das Überdruckventil abgefangen werden, ohne eine Gefährdung das Nutzer oder eine übermäßige Belastung der Bauelemente der Brühvorrichtung. Bei einer Störung im normalen Betriebsablauf durch hoch gefüllte Kaffeepads oder eine teilweise Verstopfung des Brühkammerauslasses, bzw. des Heißwasserauslaufs, kann es dazu kommen, dass das Überdruckventil nur einen Teil des durch die Pumpe geförderten Brühwassers abführt, entsprechend der Druckbegrenzung, während der andere, entsprechend reduzierte Teil, aus der Brühkammer 18, bzw. dem Heißwasserauslauf 10 austritt.

## Patentansprüche

1. Brühvorrichtung zur Zubereitung von Kaffee, insbesondere für eine Niederdruckkaffeemaschine, mit einer Brühkammer (18), einer Ventileinheit (6) und einer Überlaufeinheit, die einen selbsttätig schaltenden, druckgesteuerten Ventilmechanismus aufweist, mit einer in einem ersten Druckbereich offenen Überlaufschaltstellung und einer in einem zweiten, höheren Druckbereich geschlossenen Brühschaltstellung, wobei der Ventilmechanismus zusätzlich eine offene Überdruckschaltstellung in einem dritten, oberhalb des zweiten liegenden Druckbereich aufweist,
**dadurch gekennzeichnet, dass** die Ventileinheit (6) mindestens eine Membran (41) und eine Kanalplatte (40) umfasst, wobei die Kanalplatte (40) mindestens eine Ventilöffnung an der der Membran (41) zugewandten Seite der Kanalplatte, mindestens einen mit der mindestens einen Ventilöffnung in Verbindung stehenden Kanalabschnitt zum radialen Führen des Brühwassers in der Kanalplatte (40) und mindestens eine mit dem mindestens einen Kanalabschnitt in Verbindung stehenden Durchgangsbohrung, die an der gegenüberliegenden Seite der Kanalplatte (40) mündet, aufweist.

2. Brühvorrichtung nach Anspruch 1,
**dadurch gekennzeichnet, dass** der Ventilmechanismus ein Überlaufventil und ein Überdruckventil aufweist, wobei das Überlaufventil im ersten Druckbereich offen ist und das Überdruckventil nur im dritten Druckbereich offen ist.

3. Brühvorrichtung nach Anspruch 2,
**dadurch gekennzeichnet, dass** das Überlaufventil und das Überdruckventil dauerhaft parallel geschaltet sind.

4. Brühvorrichtung nach Anspruch 2 oder 3,
**dadurch gekennzeichnet, dass** das Überdruckventil eine Ventilkugel (89) und eine Druckfeder (90) aufweist.

5. Brühvorrichtung nach einem der Ansprüche 2 bis 4,
**dadurch gekennzeichnet, dass** die Überlaufeinheit einen Überlauf (77) aufweist und das Überdruckventil und das Überlaufventil in den Überlauf (77) münden.

6. Brühvorrichtung nach einem der Ansprüche 1 bis 5,
**dadurch gekennzeichnet, dass** der erste Druckbereich in einem Bereich bis 1,5 bar, der zweite Druckbereich in einem Bereich zwischen 1,2 und 2,5 bar und der dritte Druckbereich in einem Bereich oberhalb von 1,8 bar festgelegt sind, wobei sich die tatsächlich festgelegten Druckbereiche im Wesentlichen überschneidungsfrei sind.

7. Brühvorrichtung nach einem der Ansprüche 1 bis 6,
**dadurch gekennzeichnet, dass** die Brühkammer (18) einen oberen Brühkammerteil (2) und einen unteren Brühkammerteil (3) aufweist, wobei der obere Brühkammerteil (2) die Überlaufeinheit umfasst.

8. Brühvorrichtung nach Anspruch 7,
**dadurch gekennzeichnet, dass** der obere Brühkammerteil (2) weiter einen Zulauf (9) für Brühwasser, eine Ventileinheit (6), einen Auslass für Brühwasser in die Brühkammer (18) und einen Heißwasserauslauf (10) aufweist.

9. Brühvorrichtung nach Anspruch 8,
**dadurch gekennzeichnet, dass** der Zulauf (9), der Überlauf (77) und/oder der Heißwasserauslauf (10) Steckanschlüsse aufweisen, die bevorzugt zum Anschließen flexibler Leitungen ausgebildet sind.

10. Brühvorrichtung nach Anspruch 8 oder 9,
**dadurch gekennzeichnet, dass** die Ventileinheit (6) ein Auslassventil, ein Heißwasser-Auslaufventil und das Überlaufventil umfasst.

11. Brühvorrichtung nach einem der Ansprüche 1 bis 10,
**dadurch gekennzeichnet, dass** die mindestens eine Membran (41) als einteilige, flexible Platte, bevorzugt aus einem gummielastischen Material, ausgebildet ist, die sich im Wesentlichen über eine Stirnfläche der Kanalplatte (40) erstreckt und mindestens ein Loch aufweist, das einen Übertritt des Brühwassers von der einen Membranseite auf die andere Membranseite ermöglicht.

12. Brühvorrichtung nach Anspruch 10 oder 11,
**dadurch gekennzeichnet, dass** das Überlaufventil, das Auslassventil und/oder das Heißwasser-Auslaufventil von der Kanalplatte (40) und der mindestens einen Membran (41) ausgebildet sind.

13. Brühvorrichtung nach einem der Ansprüche 7 bis 12,
**dadurch gekennzeichnet, dass** der obere Brühkammerteil (2) eine Überdruckventilplatte (85), eine Deckplatte (5) und eine Druckplatte (7) aufweist, wobei die Ventileinheit (6) zwischen der Druckplatte (7) und der Deckplatte (5) angeordnet ist und das Überdruckventil zwischen der Überdruckventilplatte (85) und der Deckplatte (5) ausgebildet ist.

14. Brühvorrichtung nach einem der Ansprüche 7 bis 13,
**dadurch gekennzeichnet, dass** der untere Brühkammerteil (3) eine Vertiefung zur Aufnahme von mindestens einem mit gemahlenem Kaffee gefüllten Filterkissen (Kaffeepad) aufweist, und der obere Brühkammerteil (2) relativ zum unteren Brühkammerteil (3) bewegbar ausgeführt und von einer Öffnungsstellung, in der das Kaffeepad einsetz- oder entnehmbar ist, in eine Brühstellung überführbar ist.

15. Brühvorrichtung nach einem der Ansprüche 8 bis 14,
**dadurch gekennzeichnet, dass** ein Stellmechanismus vorgesehen ist, wobei der Stellmechanismus ausgebildet ist, die Ventileinheit (6) zwischen dem Auslass für Brühwasser und dem Heißwasserauslauf (10) umzuschalten.

16. Brühvorrichtung nach einem der Ansprüche 1 bis 15,
**dadurch gekennzeichnet, dass** die Brühkammer (18) einen oberen Brühkammerteil (2), einen unteren Brühkammerteil und mindestens ein in einer Vertiefung des unteren Brühkammerteils angeordnetes und mit gemahlenem Kaffee gefülltes Filterkissen oder Kaffeepad aufweist, wobei der obere Brühkammerteil (2) und der untere Brühkammerteil relativ zueinander bewegbar ausgeführt und von einer Öffnungsstellung, in der das Kaffeepad einsetz- oder entnehmbar ist, in eine Brühstellung überführbar sind, und die Überlaufeinheit im oberen Brühkammerteil 82) angeordnet ist.

## Claims

1. Brewing device for preparing coffee, in particular for a low-pressure coffee machine, with a brewing chamber (18), a valve unit (6) and an overflow unit which has an automatically switching, pressure-controlled valve mechanism, with an overflow switch position open in a first pressure range and a brewing switch position closed in a second, higher pressure range, and the valve mechanism additionally has an over-pressure switch position open in a third pressure range above the second pressure range,
**characterised in that** the valve unit (6) comprises at least one membrane (41) and a duct plate (40) and the duct plate (40) has at least one valve opening on the side of the duct plate facing the membrane (41), at least one duct portion communicating with the at least one valve opening for radially directing the brewing water through the duct plate (40) and at least one continuous bore communicating with the at least one duct portion which opens into the oppositely lying side of the duct plate (40).

2. Brewing device as claimed in claim 1,
**characterised in that** the valve mechanism has an overflow valve and an over-pressure valve and the overflow valve is open in the first pressure range and the over-pressure valve is open only in the third pressure range.

3. Brewing device as claimed in claim 2,
**characterised in that** the overflow valve and the over-pressure valve are permanently connected in parallel.

4. Brewing device as claimed in claim 2 or 3,
**characterised in that** the over-pressure valve has a valve ball (89) and a compression spring (90).

5. Brewing device as claimed in one of claims 2 to 4,
**characterised in that** the overflow unit has an overflow (77) and the over-pressure valve and the overflow valve open into the overflow (77).

6. Brewing device as claimed in one of claims 1 to 5,
**characterised in that** the first pressure range is set in a range up to 1.5 bar, the second pressure range is set in a range between 1.2 and 2.5 bar and the third pressure range is set in a range above 1.8 bar, and the pressure ranges actually set do not essentially overlap.

7. Brewing device as claimed in one of claims 1 to 6,
**characterised in that** the brewing chamber (18) has a top brewing chamber part (2) and a bottom brewing chamber part (3), and the top brewing chamber part (2) incorporates the overflow unit.

8. Brewing device as claimed in claim 7,
**characterised in that** the top brewing chamber part (2) also has an inlet (9) for brewing water, a valve unit (6), an outlet into the brewing chamber (18) for brewing water and a hot water outlet (10).

9. Brewing device as claimed in claim 8,
**characterised in that** the inlet (9), the overflow (77) and/or the hot water outlet (10) have plug-in terminations which are preferably designed for connecting flexible pipes.

10. Brewing device as claimed in claim 8 or 9,
**characterised in that** the valve unit (6) comprises an outlet valve, a hot water outlet valve and the overflow valve.

11. Brewing device as claimed in one of claims 1 to 10,
**characterised in that** the at least one membrane (41) is provided in the form of an integral flexible plate, preferably made from a rubber elastic material, which extends essentially across an end face of the duct plate (40) and has at least one orifice which enables the brewing water to pass from one membrane side to the other membrane side.

12. Brewing device as claimed in claim 10 or 11,
**characterised in that** the overflow valve, the outlet valve and/or the hot water outlet valve are formed by the duct plate (40) and at least one membrane (41).

13. Brewing device as claimed in one of claims 7 to 12,
**characterised in that** the top brewing chamber part (2) has an over-pressure valve plate (85), a cover plate (5) and a pressure plate (7), and the valve unit (6) is disposed between the pressure plate (7) and the cover plate (5) and the over-pressure valve is disposed between the over-pressure valve plate (85) and the cover plate (5).

14. Brewing device as claimed in one of claims 7 to 13,
**characterised in that** the bottom brewing chamber part (3) has a recess for accommodating at least one filter pad (coffee pad) filled with ground coffee and the top brewing chamber part (2) is designed so that it can move relative to the bottom chamber part (3) and can be transferred from an open position, in which the coffee pad can be inserted or removed, into a brewing position.

15. Brewing device as claimed in one of claims 8 to 14,
**characterised in that** a positioning mechanism is provided and the positioning mechanism is designed to switch the valve unit (6) between the outlet for brewing water and the hot water outlet (10).

16. Brewing device as claimed in one of claims 1 to 15,
**characterised in that** the brewing chamber (18) has a top brewing chamber part (2), a bottom brewing chamber part and at least one filter pad or coffee pad filled with ground coffee and disposed in a recess of the bottom brewing chamber part, and the top brewing chamber part (2) and the bottom brewing chamber part are designed so that they can be moved relative to one another and can be transferred from a position in which the coffee pad can be inserted or removed into a brewing position, and the overflow unit is disposed in the top brewing chamber part (2).

## Revendications

1. Dispositif d'infusion pour la préparation de café, notamment pour une machine à café à basse pression, avec une chambre d'infusion (18), une unité de soupape (6) et une unité de débordement qui comporte un mécanisme de soupape à commutation automatique et à commande par pression, une position de commutation de débordement ouverte dans une première plage de pression et une position de commutation d'infusion fermée dans une deuxième plage de pression qui est supérieure à la première, le mécanisme de soupape comportant en plus une position de commutation de surpression ouverte dans une troisième plage de pression qui est supérieure à la deuxième,
**caractérisé par le fait que** l'unité de soupape (6) comprend au moins une membrane (41) et une plaque de canal (40), la plaque de canal (40) comportant au moins une ouverture de soupape sur celui des côtés de la plaque de canal qui est proche de la membrane (41), au moins un tronçon de canal qui est en liaison avec l'ouverture de soupape et qui sert au guidage radial de l'eau d'infusion dans la plaque de canal (40) et au moins un trou traversant qui est en liaison avec le tronçon de canal et qui débouche sur le côté opposé de la plaque de canal (40).

2. Dispositif d'infusion selon la revendication 1,
**caractérisé par le fait que** le mécanisme de soupape comporte une soupape de débordement et une soupape de surpression, la soupape de débordement étant ouverte dans la première plage de pression et la soupape de surpression étant ouverte seulement dans la troisième plage de pression.

3. Dispositif d'infusion selon la revendication 2,
**caractérisé par le fait que** la soupape de débordement et la soupape de surpression sont commutées en permanence en parallèle.

4. Dispositif d'infusion selon la revendication 2 ou la revendication 3,
**caractérisé par le fait que** la soupape de surpression comporte une bille de soupape (89) et un ressort de compression (90).

5. Dispositif d'infusion selon l'une des revendications 2 à 4,
**caractérisé par le fait que** l'unité de débordement comporte un trop-plein (77) et que la soupape de surpression et la soupape de débordement débouchent dans le trop-plein (77).

6. Dispositif d'infusion selon l'une des revendications 1 à 5,
**caractérisé par le fait que** la première plage de pression est fixée dans une plage allant jusqu'à 1,5 bar, la deuxième plage de pression dans une plage comprise entre 1,2 et 2,5 bar et la troisième plage de pression dans une plage supérieure à 1,8 bar, les plages de pression effectivement fixées ne se chevauchant pas globalement.

7. Dispositif d'infusion selon l'une des revendications 1 à 6,
**caractérisé par le fait que** la chambre d'infusion (18) comporte une partie supérieure de chambre d'infusion (2) et une partie inférieure de chambre d'infusion (3), la partie supérieure de chambre d'infusion (2) comprenant l'unité de débordement.

8. Dispositif d'infusion selon la revendication 7,
**caractérisé par le fait que** la partie supérieure de chambre d'infusion (2) comporte aussi une arrivée (9) pour l'eau d'infusion, une unité de soupape (6), une sortie pour l'eau d'infusion dans la chambre d'infusion (18) et une sortie d'eau chaude (10).

9. Dispositif d'infusion selon la revendication 8,
**caractérisé par le fait que** l'arrivée (9), le trop-plein (77) et/ou la sortie d'eau chaude (10) comportent des raccords enfichables qui sont conçus de préférence pour le raccordement de conduites souples.

10. Dispositif d'infusion selon la revendication 8 ou 9,
**caractérisé par le fait que** l'unité de soupape (6) comprend une soupape de sortie, une soupape de sortie d'eau chaude et la soupape de débordement.

11. Dispositif d'infusion selon l'une des revendications 1 à 10,
**caractérisé par le fait que** la membrane (41) est conçue comme une plaque souple d'une seule pièce, de préférence en un matériau élastique en caoutchouc, qui s'étend globalement sur toute une surface frontale de la plaque de canal (40) et qui comporte au moins un trou permettant le passage de l'eau d'infusion d'un côté de la membrane à l'autre côté de la membrane.

12. Dispositif d'infusion selon la revendication 10 ou 11,
**caractérisé par le fait que** la soupape de débordement, la soupape de sortie et/ou la soupape de sortie d'eau chaude sont conçues à partir de la plaque de canal (40) et de la membrane (41).

13. Dispositif d'infusion selon l'une des revendications 7 à 12,
**caractérisé par le fait que** la partie supérieure de chambre d'infusion (2) comporte une plaque de soupape de surpression (85), une plaque de couverture (5) et une plaque de pression (7), l'unité de soupape (6) étant agencée entre la plaque de pression (7) et la plaque de couverture (5) et la soupape de surpression étant conçue entre la plaque de soupape de surpression (85) et la plaque de couverture (5).

14. Dispositif d'infusion selon l'une des revendications 7 à 13,
**caractérisé par le fait que** la partie inférieure de chambre d'infusion (3) comporte un creux pour loger le coussin-filtre rempli de café moulu (dosette de café) et que la partie supérieure de chambre d'infusion (2) est mobile par rapport à la partie inférieure de chambre d'infusion (3) et peut être déplacée d'une position d'ouverture dans laquelle la dosette de café peut être posée ou retirée à une position d'infusion.

15. Dispositif d'infusion selon l'une des revendications 8 à 14,
**caractérisé par le fait qu**'un mécanisme de réglage est prévu, le mécanisme de réglage étant conçu pour basculer l'unité de soupape (6) entre la sortie pour l'eau d'infusion et la sortie d'eau chaude (10).

16. Dispositif d'infusion selon l'une des revendications 1 à 15,
**caractérisé par le fait que** la chambre d'infusion (18) comporte une partie supérieure de chambre d'infusion (2), une partie inférieure de chambre d'infusion et au moins un coussin-filtre ou dosette de café rempli de café moulu et placé dans un creux de la partie inférieure de chambre d'infusion, la partie supérieure de chambre d'infusion (2) et la partie inférieure de chambre d'infusion étant mobiles l'une par rapport à l'autre et pouvant être déplacées d'une position d'ouverture dans laquelle la dosette de café peut être posée ou retirée à une position d'infusion et l'unité de débordement étant agencée dans la partie supérieure de chambre d'infusion (2).
